Europäisches Patentamt

European Patent Office

Office européen des brevets

(11) Numéro de publication : **0 434 584 B1**

(12) ## FASCICULE DE BREVET EUROPEEN

(45) Date de publication du fascicule du brevet :
**22.11.95 Bulletin 95/47**

(51) Int. Cl.[6] : **H04L 25/03,** H04N 7/00,
H04N 5/21

(21) Numéro de dépôt : **90460048.3**

(22) Date de dépôt : **17.12.90**

(54) **Dispositif d'égalisation de perturbations linéaires et non-linéaires d'un signal reçu à travers un canal de transmission perturbé.**

(30) Priorité : **20.12.89 FR 8917158**

(43) Date de publication de la demande :
**26.06.91 Bulletin 91/26**

(45) Mention de la délivrance du brevet :
**22.11.95 Bulletin 95/47**

(84) Etats contractants désignés :
**DE GB IT NL**

(56) Documents cités :
**EP-A- 0 040 801
EP-A- 0 328 461
US-A- 4 091 418
IEEE TRANSACTIONS ON INFORMATION
THEORY, vol. 35, no. 3, mai 1989, pages
620-625, IEEE, New York, US; E.BIGLIERI et
al.: "The optimal linear receiving filter for
digital transmission over nonlinear channels"**

(73) Titulaire : **FRANCE TELECOM
6, Place d'Alleray
F-75015 Paris (FR)**
Titulaire : **TELEDIFFUSION DE FRANCE S.A.
21-27, rue Barbès
F-92542 Montrouge Cédex (FR)**

(72) Inventeur : **Palicot, Jacques
15 rue Robelin
F-35000 Rennes (FR)**
Inventeur : **Halbert-Lassale, Roseline
2B allée Raymond Cornon
F-35000 Rennes (FR)**

(74) Mandataire : **Corlau, Vincent
c/o Cabinet Vidon,
Immeuble Germanium,
80 avenue des Buttes de Coesmes
F-35700 Rennes (FR)**

EP 0 434 584 B1

Jouve, 18, rue Saint-Denis, 75001 PARIS

## Description

**Dispositif d'égalisation de perturbations linéaires et non-linéaires d'un signal reçu à travers un canal de transmission perturbé.**

Le domaine de l'invention est celui du traitement de signaux, dans les récepteurs de systèmes de transmission ou de diffusion. Plus précisément, l'invention concerne l'égalisation de tels signaux à la réception, de façon à corriger les perturbations linéaires et non-linéaires induites dans le canal de transmission.

L'égaliseur s'applique à tous les types de signaux analogiques et/ou numériques, quelqu'en soit le mode de transmission ou de diffusion.

Dans une application particulière, non limitative de l'invention, le dispositif de l'invention permet l'égalisation de signaux de télévision transmis selon les normes X-MAC. L'invention peut également s'appliquer aux autres types de signaux de télévision, ainsi qu'aux signaux sonores et aux signaux de données.

On sait que la diffusion ou la transmission d'un signal sur tout type de support engendre des perturbations linéaires et non-linéaires. Il en résulte une déformation du signal, qui peut être relativement importante. Dans le cas d'un signal de données, cela entraine notamment des phénomènes de chevauchement de données, ou interférence entre symboles se traduisant par une augmentation du taux d'erreur. Dans le cas d'un signal de télévision, cela provoque des déformations de l'image, une perte de définition,...

L'opération d'égalisation a pour but, de façon connue, de traiter le signal reçu dans un module d'égalisation dont la fonction de transfert est le plus proche possible de l'inverse de celle du canal de transmission à tout instant, de façon à compenser les perturbations induites dans le canal.

Les perturbations linéaires sont par exemple dues à la distorsion des réponses en amplitude et en phase en fonction de la fréquence, ou aux phénomènes d'échos.

On connaît des dispositifs de correction des distorsions linéaires, notamment sous la forme d'un égaliseur autoadaptatif s'adaptant sur un signal de données, comme décrit dans le document de brevet FR-A-2 556 530. Selon ce document, l'égalisation consiste à mettre en oeuvre un algorithme de minimisation de l'erreur quadratique moyenne dans le signal reçu, en ajustant les coefficients de filtrage d'un filtre numérique d'égalisation du signal reçu. Un grand nombre d'algorithmes peut être envisagé, comme ceux présentés dans la thèse "étude et réalisation d'un correcteur d'écho adapté à la diffusion de données DIDON" (soutenue le 9 décembre 1983 devant l'Université de Rennes I par M. Jacques PALICOT).

Par le document de brevet français FR-A-2 627 340, on connaît également un égaliseur autoadaptatif applicable aux signaux de type X-MAC, et notamment aux signaux HD-MAC, consistant à introduire un signal de référence dans le multiplex temporel des signaux d'images analogiques et de signaux numériques de son et de données caractéristiques des signaux X-MAC, de façon à utiliser ce signal de référence pour réaliser une égalisation adaptative à la réception.

L'égalisation s'effectue alors en employant un filtre transversal adaptatif, alimenté par les échantillons du signal HD-MAC, muni de moyens d'adaptation de ses coefficients par comparaison entre la séquence de référence reçue en sortie du filtre et la séquence de référence mémorisée.

Ces types d'égaliseurs linéaires agissent de façon efficace sur les perturbations linéaires, mais ne peuvent pas corriger les perturbations non-linéaires, pourtant fréquemment rencontrées dans la pratique. Ces perturbations non-linéaires peuvent notamment être dues aux saturations d'amplificateurs, aux non-linéarités des tubes à ondes progressives lors d'un trajet satellite, aux modules de sélection en radiofréquence et de démodulation en fréquence intermédiaire d'un récepteur de télévision, aux phénomènes d'écrêtage et aux non-linéarités liées à la quantification du signal.

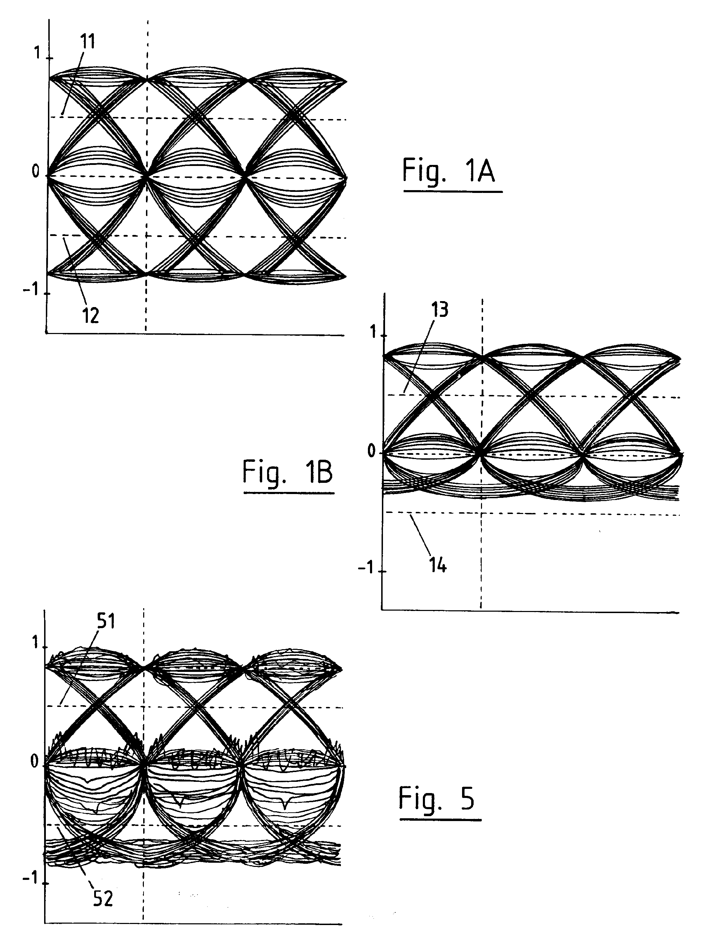

Les figures 1-A et 1-B présentent un exemple de perturbation non-linéaire, sur un diagramme de l'oeil correspondant à un signal duobinaire. La figure 1-A représente le diagramme de l'oeil sans perturbation, tel qu'il est à l'émission. Dans ce cas, les seuils fixes 11 et 12 permettent de différencier aisément les valeurs 1, 0 et -1, à l'instant où l'oeil est ouvert.

La figure 1-B présente le même diagramme de l'oeil, à la réception, dans le cas d'une non-linéarité, qui est ici une saturation. Il apparaît clairement que la déformation du signal rend celui-ci en grande partie illisible sans traitement. Ainsi, un seuillage fixe 13,14 entrainerait l'interprétation de toutes les valeurs -1 comme valant 0.

Le document IEEE TRANSACTIONS ON INFORMATION THEORY, vol. 35, n° 3, mai 1989, PP. 620-625, IEEE, New-York, US ; E. BIGLIERI et al.: "The Optimal Linear Receiving Filter for Digital Transmission Over Nonlinear Channels" décrit un filtre linéaire optimisé pour la réception de signaux numériques transmis dans des canaux non-linéaires. Ce filtre est constitué de M modules de filtrage agissant en parallèle sur le signal reçu. Les M signaux obtenus sont ensuite sommés, pour former le signal filtré final. Ce document présente donc un filtre linéaire optimisé, et non un égaliseur non-linéaire. En effet, il ne tient pas compte du signal reçu pour adapter le filtrage.

Il n'existe pas d'égaliseur permettant de corriger les perturbations non-linéaires de façon efficace. L'invention a pour but de pallier cet inconvénient.

Plus précisément, l'invention a pour objectif de fournir un dispositif d'égalisation permettant la correction des perturbations non-linéaires.

Un objectif complémentaire de l'invention est de fournir un tel dispositif de correction des perturbations non-linéaires permettant également la correction des perturbations linéaires.

Un autre objectif de l'invention est de fournir un tel dispositif d'égalisation compatible avec les récepteurs de systèmes de transmission existants. Ainsi, le dispositif d'égalisation de l'invention peut avantageusement remplacer, dans ces récepteurs, les dispositifs d'égalisation connus.

L'invention a également pour objectif d'utiliser des moyens de filtrage connus.

Ces objectifs, ainsi que d'autres qui apparaîtront par la suite, sont atteints à l'aide d'un dispositif d'égalisation de perturbations linéaires et non-linéaires selon la revendication 1.

De façon avantageuse, lesdits moyens de sélection comprennent des moyens d'analyse dudit signal et de calcul d'au moins une valeur de seuil, et un séparateur de niveau.

L'analyse du signal reçu permet le positionnement du ou des seuils du séparateur de niveau, qui oriente les éléments de signal vers le ou les filtres linéaires souhaités.

Lesdits moyens d'analyse du signal et de calcul comprennent avantageusement des moyens de détection des non-linéarités dudit signal, par analyse de lignes-test présentes dans ledit signal, telles que des rampes ou des signaux en escalier.

Dans un mode de réalisation simplifié de l'invention, ledit sélecteur de niveau est directement piloté par ledit signal.

Ledit sélecteur de niveau peut, de façon encore plus simplifiée, être à seuil(s) fixe(s).

De façon avantageuse, ledit dispositif d'égalisation comprend des moyens de calcul des coefficients desdits filtres linéaires, par minimisation de l'erreur quadratique moyenne.

On distingue deux types d'égalisation, autoadaptative ou adaptative, selon que le signal comporte un signal de données ou non.

Dans le cas d'un dispositif d'égalisation appliqué à un signal comprenant un signal de données numérique, lesdits moyens de calcul des coefficients utilisent avantageusement ledit signal de données numérique.

Dans ce cas, le dispositif fonctionne sur les données. L'égalisation est donc autoadaptative.

Lorsque le dispositif de l'invention est appliqué à un signal analogique, lesdits moyens de calcul des coefficients utilisent un signal de référence inséré dans le signal analogique et connu desdits moyens de calcul.

Ledit signal de référence comprend de façon avantageuse une première séquence binaire pseudo-aléatoire, combinée avec une seconde séquence pseudo-aléatoire donnant les amplitudes des valeurs binaires.

Il s'agit alors d'une égalisation adaptative, nécessitant la mémorisation du signal de référence dans le récepteur.

Dans un mode de réalisation particulier de l'invention, lesdits moyens de calcul des coefficients effectuent le calcul sur un seul desdits filtres à chaque itération, et/ou sur un seul coefficient de chacun desdits filtres, de manière cyclique.

De façon avantageuse, lesdits moyens de calcul des coefficients tiennent compte de la valeur moyenne dudit signal et/ou des valeurs maximales dudit signal.

Dans un mode de réalisation simplifié, lesdits moyens de calcul des coefficients tiennent compte des valeurs de seuil calculées par lesdits moyens d'analyse du signal de calcul des valeurs de seuil du séparateur de niveaux.

Dans le cas d'un signal duobinaire, lesdits moyens de calcul des coefficients tiennent compte avantageusement des ruptures de codes.

Préférentiellement, lesdits filtres linéaires sont des filtres à réponse impulsionnelle finie.

De façon avantageuse, ledit dispositif se comporte, en phase d'initialisation des calculs desdites valeurs de seuils et/ou des calculs desdits coefficients, comme un filtre linéaire transparent ou prédéterminé.

D'autres caractéristiques et avantages de l'invention apparaîtront à la lecture de la description suivante d'un mode de réalisation préférentiel de l'invention, dans le cas de la réception de signaux de type X-MAC, donné à titre illustratif et non limitatif, et des dessins annexés dans lesquels :

- Les figures 1A et 1B illustrent l'effet de perturbations non-linéaires sur un signal, au moyen de diagrammes de l'oeil respectivement à l'émission et à la réception du signal dans le cas d'une saturation;
- La figure 2 est un schéma illustrant le principe général du dispositif d'égalisation selon l'invention, dans un mode de réalisation d'égalisation en temps différée ;
- La figure 3 est un schéma de principe d'un mode de réalisation du filtre non-linéaire du dispositif de la figure 2 ;

- La figure 4 est un schéma de principe d'un filtre transversal de l'état de la technique connu, utilisable dans le filtre non-linéaire de la figure 3.
- La figure 5 illustre le fonctionnement du dispositif de la figure 2, au moyen d'un diagramme de l'oeil correspondant à l'égalisation du diagramme de l'oeil présenté en figure 1B.

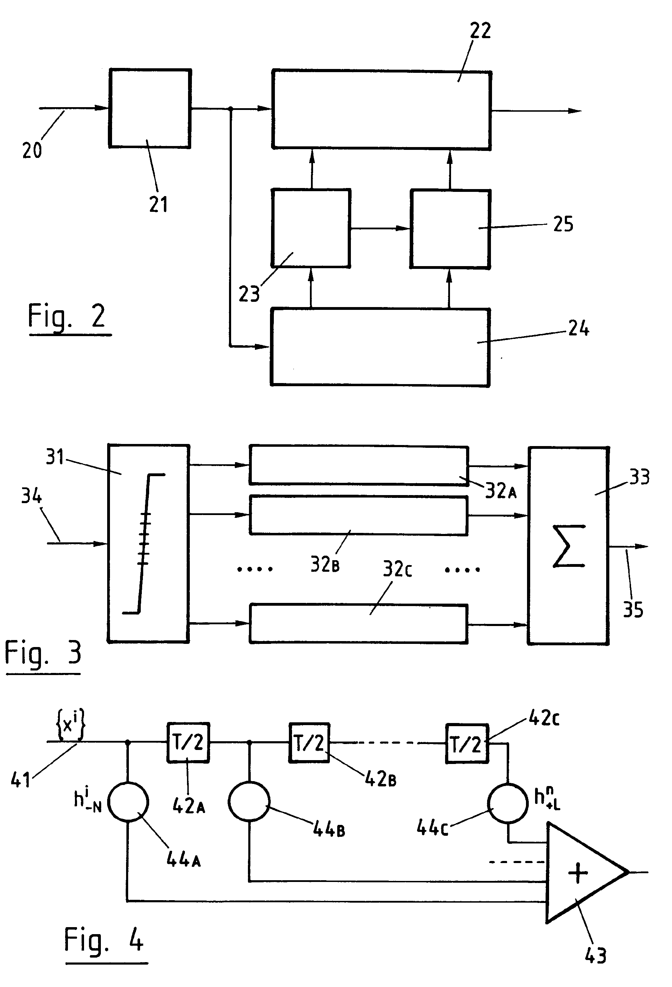

Le mode de réalisation détaillé ci-après en liaison avec les figures 2 à 5 correspond notamment à l'égalisation d'un signal de type X-MAC, c'est-à-dire constitué par un multiplex d'une salve de son et de données numériques et d'un signal analogique de luminance et de chrominance, pour chaque ligne d'un signal de télévision.

Le dispositif selon l'invention peut fonctionner aussi bien de manière adaptative que de manière auto-adaptative.

Lorsque le dispositif s'applique à un signal de données, l'égalisation se fait directement sur ce signal. Il s'agit alors d'une égalisation auto-adaptative. Cela présente l'avantage de ne pas nécessiter de phase d'apprentissage. Dans le cas de signaux de télévision, il se présente deux possibilités. Le dispositif peut fonctionner sur les données multiplexées au signal de télévision, et le principe reste le même que dans le cas d'un signal de données. Ce principe peut notamment être utilisé dans le cas des signaux D2-MAC.

En revanche, lorsque le signal de données n'est pas représentatif du signal d'images, ainsi que cela se produit pour les signaux de type HD-MAC, l'égalisation se fait de manière adaptative, à l'aide d'un signal de référence particulier, multiplexé au signal d'image, et connu du récepteur.

La figure 2 schématise le dispositif d'égalisation non-linéaire selon l'invention.

Le signal reçu 20, préalablement numérisé par un convertisseur anologique/numérique 21 est soumis en parallèle à un module 22 de filtrage non-linéaire et à un module 23 d'analyse du signal, par l'intermédiaire d'une mémoire 24. L'analyse du signal consiste à détecter les non-linéarités du signal, et à déterminer les valeurs des différents seuils utilisés par le module 22 de filtrage et éventuellement le module 25 de calcul algorithmique.

De façon à éviter les problèmes de déphasage de l'horloge d'échantillonnage, le dispositif d'égalisation linéaire fonctionne de préférence à une fréquence multiple de celle des données.

Le module 25 de calcul algorithmique détermine les valeurs des coefficients de filtrage, à l'aide des données mémorisées et d'un algorithme détaillé plus loin.

la figure 3 présente la structure du module de filtrage non-linéaire. Celui-ci est constitué d'un séparateur de niveaux 31, d'au moins deux filtres linéaires $32_A$, $32_B$, $32_C$ en parallèle et d'un sommateur 33.

Le séparateur de niveaux 31 permet, par comparaison à des seuils, d'aiguiller les données entrantes 34 vers un ou plusieurs filtres linéaires $32_A$, $32_B$, $32_C$. Ces seuils sont fixés par le module 23 (figure 2) d'analyse du signal, ainsi que cela est détaillé plus loin. Dans un mode de réalisation simplifié, les valeurs de seuil peuvent bien entendu être fixes. Dans ce dernier cas, le module de calcul 23 est supprimé.

On peut utiliser, pour déterminer les non-linéarités, une ligne-test existant dans le signal. Pour les signaux de type MAC, il peut s'agir de la ligne 312, fournissant un signal en marches d'escalier, ou de la ligne 623, fournissant une rampe. Ces signaux permettent de détecter aisément les non-linéarités, et donc de positionner de façon optimale les seuils du séparateur de niveaux.

Dans le mode de réalisation présenté, un filtre linéaire $32_A$ est associé à chaque seuil. Ainsi, un échantillon du signal n'est présent que dans un seul filtre linéaire, et transite dans ce même filtre. Il est également possible de diriger, en fonction des niveaux, les échantillons vers plusieurs filtres linéaires $32_A$, $32_B$, $32_C$ en parallèle. On peut notamment utilisé la sortie du CAN 21 pour sélectionner plusieurs filtres.

Les filtres linéaires $32_A$, $32_B$, $32_C$ sont des filtres transversaux à réponse impulsionnelle finie, de type connu, comportant tous le même nombre de coefficients.

La figure 4 schématise un filtre transversal à réponse impulsionnelle finie. Chaque échantillon $x_i$ 41 du signal d'entrée traverse une chaine de cellules $42_A$, $42_B$, $42_C$ montées en série et introduisant chacune un retard. Ce retard est par exemple égal à T, T étant la période d'échantillonnage du signal reçu. Chacune des cellules est d'autre part reliée à un sommateur 43, par l'intermédiaire de multiplicateurs $44_A$, $44_B$, $44_C$. Les coefficients de multiplication des multiplicateurs sont déterminés par le module 25 de calcul algorithmique de la figure 2.

Le dispositif de l'invention est également compatible avec les autres types de filtres transversaux, ainsi qu'avec d'autres types de filtres numériques.

La sortie 35 du module 22 de filtrage non-linéaire est obtenue par sommation 33 des sorties de tous les filtres linéaires.

la valeur de la sortie 35 du module de filtrage s'écrit :

$$y = \sum_{j=1}^{n} \left( \sum_{i=-N}^{L} H_i^j \, X_i^j \right)$$

avec :

n : nombre de filtres linéaires ;

L+N+1 : nombre de cellules à retard de chaque filtre ;

$H_i^j$ : coefficients de multiplication ;

$X_i^j = X_i$      si $S_{j-1} < X_i < S_j$

       = 0 sinon,

où : $x_i$ : valeur de l'échantillon,

     $S_{j-1}, S_j$ : valeurs des seuils.

Dans le cas d'un signal de données, l'égalisation est autoadaptative. Toute perturbation non-linéaire affecte en effet des niveaux, par exemple binaires ou duobinaires, connus.

Dans un mode de réalisation simplifié, l'analyse du signal peut alors consister à calculer la valeur moyenne du signal reçu. Cette valeur moyenne sert à positionner les seuils du séparateur de niveaux, ainsi que les seuils de décision pour l'algorithme de calcul des coefficients des filtres linéaires. De façon à simplifier le dispositif, il est également possible d'utiliser dans le séparateur des seuils fixes.

Lorsque le dispositif s'applique à un signal de télévision, il peut également fonctionner de manière autoadaptative sur un signal de données multiplexé au signal de télévision. C'est par exemple le cas des signaux du type D2-MAC. La correction est alors optimale pour le signal de données, mais pas nécessairement pour le signal d'image.

Pour certaines applications, et notamment la transmission d'un signal HD-MAC, il est nécessaire d'utiliser pour l'égalisation un signal de référence. En effet, dans le cas des signaux HD-MAC, le signal duobinaire n'est pas représentatif, tant en ce qui concerne la fréquence que l'amplitude, du signal d'image, qui est constitué d'un ensemble d'échantillons indépendants à 20,25 MHz.

Ce signal de référence peut être multiplexé dans une ligne de la suppression trame du signal de télévision. Il subit alors les mêmes traitements que le signal d'image. Il est par conséquent complétement représentatif, à la réception, de ce signal d'image.

Le signal de référence étant connu du récepteur, le dispositif d'égalisation est adaptatif. Ce signal de référence est un signal binaire pseudo-aléatoire. Il peut de plus être combiné temporellement avec une seconde séquence pseudo-aléatoire, donnant l'amplitude des "0" et des "1".

A titre d'exemple, la première séquence pseudo-aléatoire binaire peut être:

     0      1      0      1

La seconde séquence correspondante pouvant être, dans le cas où la valeur 0 correspond normalement à 0V et 0,2V et la valeur 1 à 0,3V et 0,4V :

     0V      0,3V      0,2V      0,4V

Le module 25 de calcul algorithmique est par exemple constitué d'un processeur ou d'un automate spécialisé qui utilise les données stockées en mémoire 24, et fournit les coefficients de filtrage aux filtres linéaires $32_A$, $32_B$, $32_C$ numériques après calcul.

Ce module 25 de calcul peut mettre en oeuvre l'un quelconque des algorithmes permettant de minimiser un critère d'égalisation, notamment l'erreur quadratique moyenne EQM, s'exprimant sous la forme :

$$EQM = E\{(y_k - a_k)^2\}$$

avec :

- $y_k$ : symbole reçu

- $a_k$ : symbole émis.

A partir de cette valeur minimisée, les coefficients des filtres linéaires sont calculés itérativement selon la formule :

$$
\begin{bmatrix}
\mathbf{H}^{l}{}_{k+1} \\
\cdot \\
\cdot \\
\mathbf{H}^{j}{}_{k+1} \\
\cdot \\
\cdot \\
\mathbf{H}^{n}{}_{k+1}
\end{bmatrix}
=
\begin{bmatrix}
\mathbf{H}^{l}{}_{k} \\
\cdot \\
\cdot \\
\mathbf{H}^{j}{}_{k} \\
\cdot \\
\cdot \\
\mathbf{H}^{n}{}_{k}
\end{bmatrix}
- \mu
\begin{bmatrix}
\mathbf{X}^{l}{}_{k} \\
\cdot \\
\cdot \\
\mathbf{X}^{j}{}_{k} \\
\cdot \\
\cdot \\
\mathbf{X}^{n}{}_{k}
\end{bmatrix} . e_{k}
$$

avec :
- $[H_{k+1}], [H_{k}]$ matrices des vecteurs coefficients de multiplication des différents filtres linéaires,
- n: nombre de filtres linéaires,
- $[X_k]$ matrice des vecteurs échantillons d'entrée présents dans chaque filtre linéaire,
- $\mu$: pas de convergence de l'algorithme ($\mu$>o),
- $e_k$: différence entre la sortie du module de filtrage et le signal de référence, ou une valeur estimée de la sortie.

L'algorithme de convergence permettant d'obtenir la minimisation du critère peut être une généralisation matricielle des algorithmes du gradient et dérivées, dont on trouvera des exemples dans le document de thèse précité, ou encore dans les documents de brevet français antérieurs FR-A-2 556 530 et FR-A-2 627 340.

De façon à simplifier les calculs de module de calcul, il est possible d'utiliser un algorithme simplifié du gradient, tel que :

$$[H_{k+1}] = [H_k] - \mu . \text{signe} ([X_k]) . \text{signe} (e_k)$$

De même, si la rapidité de convergence n'est pas primordiale, on peut simplifier les algorithmes précédents en effectuant l'adaptation sur un seul filtre linéaire j à chaque itération, de manière cyclique.

La formule de calcul des coefficients est alors :

$$[H_{k+1}]_j = [H_k]_j - \mu [X_k]_j . e_k$$

Il est également possible d'effectuer l'adaptation à chaque itération sur un seul coefficient de chaque filtre linéaire.

Dans le cas où le coefficient a la même position dans chaque filtre, la formule de calcul peut s'écrire :

$$[H_{i,k+1}] = [H_{i,k}] - \mu [X_{i,k}] e_k$$

Enfin, on peut combiner les deux simplifications précédentes, et n'effectuer le calcul que sur un coefficient d'un filtre linéaire à chaque itération. La formule de calcul devient alors :

$$[H_{i,k+1}]_j = [H_{i,k}]_j - \mu [X_{i,k}]_j . e_k$$

Dans le cas de l'égalisation non-linéaire autoadaptative sur un signal de données duobinaires, l'erreur est donnée par la différence entre la sortie de l'égaliseur et l'estimée de cette sortie. Afin de déterminer la valeur de l'estimée, la sortie doit être comparée à des seuils de décision. Lorsque l'algorithme fonctionne en différé, cette comparaison est faite par l'algorithme de simulation. En revanche, si l'algorithme fonctionne en temps réel, la comparaison est faite avec la sortie réelle. Le dispositif est alors automatique, et ne nécessite pas de mémoire.

Ces seuils de décision peuvent être fixés de façon classique: SF1, -SF1. Ils peuvent également être variable, en fonction du signal.

En tenant compte de la valeur moyenne du signal, on peut notamment utiliser les seuils variables suivants :
- SV1 = valeur moyenne - SF1
- SV2 = valeur moyenne + SF1

On peut également tenir compte des crêtes du signal reçu, afin de mieux positionner les seuils. Les seuils s'écrivent alors :
- SV1 = valeur moyenne + (niveau maximal - valeur moyenne)/2
- SV2 = valeur moyenne - (niveau minimal - valeur moyenne)/2

Dans le cas binaire, où l'on utilise un seul seuil, les deux possibilités précédentes se traduisent respectivement par :
- SV = valeur moyenne
- SV = (niveau maximal - niveau minimal)/2.

EP 0 434 584 B1

Lorsqu'il s'agit d'un signal de données codées duobinaire avec précodage il est possible, ce type de signal possédant une redondance intrinsèque, d'accroître la vitesse de convergence de l'algorithme en tenant compte dans le calcul de l'erreur des ruptures de code, ou transitions interdites du signal duobinaire.

Lorsque l'analyse du signal et le calcul des coefficients de filtrage se font en temps différé, le module 22 de filtrage est, avant réception des premiers coefficients calculés, soit transparent, c'est à dire que le signal de sortie est identique au signal d'entrée, soit un filtre prédéterminé, par exemple passe-bas.

Tant que les coefficients du module 22 de titrage n'ont pas changés, celui-ci se comporte comme un filtre linéaire. De même, tant que le signal reçu ne comporte pas de perturbation non-linéaire, le module 22 de filtrage non-linéaire se comporte comme un filtre linéaire.

Ainsi, le dispositif d'égalisation de perturbations non-linéaires selon l'invention permet également l'égalisation de perturbations linéaires.

A titre d'exemple de fonctionnement, la figure 5 présente le diagramme de l'oeil duobinaire obtenu après égalisation du signal représenté en figure 1-B. Les effets de la non-linéarité sont très atténués, et le diagramme obtenu est à nouveau interprétable, les niveaux de seuil 51 et 52 permettant de distinguer les trois niveaux du signal lorsque l'oeil est ouvert.

Alors que le signal de la figure 1B ne permet pas l'accrochage du récepteur, le signal obtenu à l'aide du dispositif de l'invention permet de fonctionner avec un taux d'erreur de l'ordre de $10^{-6}$.

Le dispositif d'égalisation de perturbations non-linéaires peut être implanté dans la plupart des dispositifs de réception existants. Il peut, à titre d'exemple, constituer le module d'égalisation du "dispositif de réception de données à égalisation différée et récupération de rythme rétroactive" décrit dans le document de brevet FR-A-2 650 137, publié le 25.01.91.

**Revendications**

1. Dispositif d'égalisation de perturbations linéaires et non-linéaires d'un signal (20), et notamment d'un signal de données et/ou d'images, du type comprenant un jeu d'au moins deux filtres linéaires ($32_A$, $32_B$, $32_C$) pouvant recevoir en entrée ledit signal et des moyens de sommation (33) des signaux issus desdits filtres linéaires ($32_A$, $32_B$, $32_C$) pour fournir un signal égalisé,
   caractérisé en ce qu'il comprend des moyens de sélection (23;31) d'au moins un desdits filtres linéaires ($32_A$, $32_B$, $32_C$), en fonction du niveau dudit signal (20), pour aiguiller ledit signal (20) vers au moins un desdits filtres linéaires ($32_A$, $32_B$, $32_C$).

2. Dispositif suivant la revendication 1, caractérisé en ce que lesdits moyens de sélection (23;31) comprennent des moyens (23) d'analyse dudit signal (20) et de calcul d'au moins une valeur de seuil, et un séparateur de niveau (31).

3. Dispositif suivant la revendication 2, caractérisé en ce que lesdits moyens (23) d'analyse dudit signal (20) et de calcul comprennent des moyens de détection des non-linéarités dudit signal, par analyse de lignes-test présentes dans ledit signal, telles que des rampes ou des signaux en escalier.

4. Dispositif suivant la revendication 2, caractérisé en ce que ledit sélecteur de niveau (31) est directement piloté par ledit signal (20) ou comprend au moins un seuil fixe.

5. Dispositif suivant l'une quelconque des revendications 1 à 4, caractérisé en ce qu'il comprend des moyens (25) de calcul des coefficients desdits filtres linéaires ($32_A$, $32_B$, $32_C$), par minimisation de l'erreur quadratique moyenne.

6. Dispositif suivant la revendication 5, du type appliqué à un signal comprenant un signal de données numérique, caractérisé en ce que lesdits moyens de calcul (25) utilisent ledit signal de données numérique.

7. Dispositif suivant la revendication 5, du type appliqué à un signal analogique, caractérisé en ce que lesdits moyens de calcul (25) des coefficients utilisent un signal de référence inséré dans le signal analogique, et connu desdits moyens de calcul (25).

8. Dispositif suivant la revendication 7, caractérisé en ce que ledit signal de référence comprend une première séquence binaire pseudo-aléatoire, combinée avec une seconde séquence pseudo-aléatoire donnant les amplitudes des valeurs binaires.

7

9. Dispositif suivant l'une quelconque des revendications 5 à 8, caractérisé en ce que lesdits moyens (25) de calcul des coefficients effectuent le calcul sur un seul desdits filtres linéaires ($32_A$, $32_B$, $32_C$) à chaque itération, et/ou sur un seul coefficient de chacun desdits filtres ($32_A$, $32_B$, $32_C$), de manière cyclique.

10. Dispositif suivant l'une quelconque des revendications 5 à 9, caractérisé en ce que lesdits moyens (25) de calcul des coefficients tiennent compte de la valeur moyenne dudit signal (20), et/ou des valeurs maximales dudit signal (20).

11. Dispositif suivant l'une quelconque des revendications 5 à 10, caractérisé en ce que lesdits moyens (25) de calcul des coefficients tiennent compte des valeurs de seuil calculées par lesdits moyens (23) d'analyse dudit signal (20) et de calcul des valeurs de seuil du séparateur de niveau (31).

12. Dispositif suivant l'une quelconque des revendications 5 à 11, du type appliqué à un signal duobinaire, caractérisé en ce que lesdits moyens (25) de calcul des coefficients tiennent compte également des ruptures de code.


## Patentansprüche

1. Vorrichtung zum Ausgleichen linearer und nicht-linearer Störungen eines Signals (20), insbesondere eines Daten- und/oder Bildsignals von der Art, die einen Satz von mindestens zwei Linearfiltern ($32_A$, $32_B$, $32_C$) umfaßt, die am Eingang das Signal sowie Mittel zum Addieren (33) der aus den Linearfiltern ($32_A$, $32_B$, $32_C$) kommenden Signale empfangen können, um ein ausgeglichenes Signal zu liefern, dadurch gekennzeichnet, daß sie über Mittel (23; 31) für die Auswahl mindestens eines der Linearfilter ($32_A$, $32_B$, $32_C$) als Funktion des Pegels des Signals (20) verfügt, um das Signal (20) zu mindestens einem der Linearfilter ($32_A$, $32_B$, $32_C$) zu leiten.

2. Vorrichtung gemäß Anspruch 1, dadurch gekennzeichnet, daß die Auswahlmittel (23; 31) Analysemittel (23) des Signals (20), Berechnungsmittel für mindestens einen Schwellenwert sowie eine Pegeltrennungsvorrichtung (31) umfassen.

3. Vorrichtung gemäß Anspruch 2, dadurch gekennzeichnet, daß die Analysemittel (23) des Signals (20) und zur Berechnung Erfassungsmittel für die Nichtlinearitäten des Signals enthalten, durch Analyse von Testlinien, die im Signal vorhanden sind, wie z. B. Rampen oder Stufensignale.

4. Vorrichtung gemäß Anspruch 2, dadurch gekennzeichnet, daß die Pegelauswahlvorrichtung (31) direkt von dem Signal (20) gesteuert wird oder dadurch, daß sie mindestens einen festen Schwellenwert enthält.

5. Vorrichtung gemäß einem der Ansprüche 1 bis 4, dadurch gekennzeichnet, daß sie Mittel (25) zur Berechnung der Koeffizienten der Linearfilter ($32_A$, $32_B$, $32_C$) durch Minimierung des mittleren quadratischen Fehlers umfaßt.

6. Vorrichtung gemäß Anspruch 5, von der Art, die auf ein Signal angewandt wird, welches ein digitales Datensignal umfaßt, dadurch gekennzeichnet, daß die Berechnungsmittel (25) das digitale Datensignal verwenden.

7. Vorrichtung gemäß Anspruch 5, von der Art, die auf ein Analogsignal angewandt wird, dadurch gekennzeichnet, daß die Berechnungsmittel (25) für die Koeffizienten ein Referenzsignal anwenden, welches in dem Analogsignal eingebettet ist und dem Berechnungsmittel (25) bekannt ist.

8. Vorrichtung gemäß Anspruch 7, dadurch gekennzeichnet, daß das Referenzsignal eine erste binäre, pseudoaleatorische Folge umfaßt, kombiniert mit einer zweiten pseudo-aleatorischen Folge, welche die Amplituden der Binärwerte liefert.

9. Vorrichtung gemäß einem der Ansprüche 5 bis 8, dadurch gekennzeichnet, daß die Berechnungsmittel (25) für die Koeffizienten die Berechnung eines Linearfilters ($32_A$, $32_B$, $32_C$) bei jeder Iteration und/oder eines Koeffizienten dieser Filter ($32_A$, $32_B$, $32_C$) in zyklischer Weise ausführen.

10. Vorrichtung gemäß einem der Ansprüche 5 bis 9,
dadurch gekennzeichnet, daß die Berechnungsmittel (25) für die Koeffizienten den Mittelwert und/oder die Maximalwerte des Signals (20) berücksichtigen.

11. Vorrichtung gemäß einem der Ansprüche 5 bis 10,
dadurch gekennzeichnet, daß die Berechnungsmittel (25) für die Koeffizienten die von den Analysemitteln (23) des Signals (20) berechneten Schwellenwerte sowie die von der Pegeltrennungsvorrichtung (31) berechneten Schwellenwerte berücksichtigen.

12. Vorrichtung gemäß einem der Ansprüche 5 bis 11, von der Art, die auf ein duobinäres Signal angewandt wird,
dadurch gekennzeichnet, daß die Berechnungsmittel (25) für die Koeffizienten ebenfalls die Codeabbrüche berücksichtigen.

## Claims

1. Device for the equalization of linear and nonlinear disturbances of a signal (20), and especially of a data and/or picture signal, of the type comprising a set of at least two linear filters ($32_A$,$32_B$,$32_C$) capable of receiving the said signal as input and means (33) of summation of the signals leaving the said linear filters ($32_A$,$32_B$,$32_C$) in order to provide an equalized signal,
characterized in that it comprises means (23;31) of selection of at least one of the said linear filters ($32_A$,$32_B$,$32_C$), as a function of the level of the said signal (20), in order to route the said signal (20) towards at least one of the said linear filters ($32_A$, $32_B$, $32_C$).

2. Device according to Claim 1, characterized in that the said means of selection (23;31) comprise means (23) of analysis of the said signal (20) and of calculation of at least one threshold value, and a level separator (31).

3. Device according to Claim 2, characterized in that the said means (23) of analysis of the said signal (20) and of calculation comprise means of detection of the non-linearities of the said signal, by analysis of test-lines present in the said signal, such as ramps or staircase signals.

4. Device according to Claim 2, characterized in that the said level selector (31) is driven directly by the said signal (20) or comprises at least one fixed threshold.

5. Device according to any one of Claims 1 to 4, characterized in that it comprises means (25) of calculation of the coefficients of the said linear filters ($32_A$,$32_B$,$32_C$), by minimization of the mean square error.

6. Device according to Claim 5, of the type applied to a signal comprising a digital data signal, characterized in that the said means of calculation (25) use the said digital data signal.

7. Device according to Claim 5, of the type applied to an analogue signal, characterized in that the said means of calculation (25) of the coefficients use a reference signal inserted into the analogue signal, and known to the said means of calculation (25).

8. Device according to Claim 7, characterized in that the said reference signal comprises a first pseudo-random binary sequence combined with a second pseudo-random sequence giving the amplitudes of the binary values.

9. Device according to any one of Claims 5 to 8, characterized in that the said means (25) of calculation of the coefficients perform the calculation on a single of the said linear filters ($32_A$,$32_B$,$32_C$) at each iteration, and/or on a single coefficient of each of the said filters ($32_A$,$32_B$,$32_C$), cyclically.

10. Device according to any one of Claims 5 to 9, characterized in that the said means (25) of calculation of the coefficients take account of the mean value of the said signal (20), and/or of the maximum values of the said signal (20).

11. Device according to any one of Claims 5 to 10, characterized in that the said means (25) of calculation of the coefficients take account of the threshold values calculated by the said means (23) of analysis of the said signal (20) and of calculation of the threshold values of the level separator (31).

12. Device according to any one of Claims 5 to 11, of the type applied to a duobinary signal, characterized in that the said means (25) of calculation of the coefficients take account also of the code breaks.

Fig. 1A

Fig. 1B

Fig. 5

Fig. 2

Fig. 3

Fig. 4